# EUROPÄISCHE PATENTANMELDUNG

(11) **EP 1 880 883 A1**
(43) Veröffentlichungstag der Anmeldung: **23.01.2008**
(21) Anmeldenummer: 07013511.6
(22) Anmeldetag: 10.07.2007
(51) Int. Cl.: B60J 1/20

(54) **Vorrichtung zum Sonnen- oder Sichtschtuz an der Innenseite eines Heckfensters eines Fahrzeugs, insbesondere Kraftfahrzeugs**

(30) Priorität: 19.07.2006 DE 202006011161 U
(71) Anmelder: HS Products Engineering GmbH, 82239 Alling (DE)
(72) Erfinder: Ziegenbein, Werner, 81929 München (DE)
(74) Vertreter: Eisenführ, Speiser & Partner

(57) **Zusammenfassung**

Vorrichtung zum Sonnen- oder Sichtschutz an einer Innenseite eines Heckfensters eines Fahrzeugs mit einer Schutzfläche, welche ausgehend von einer Hutablagefläche im Fahrzeuginnern in eine die Fensterfläche bedeckende Stellung und in eine die Fensterfläche freigebende Stellung bewegbar ist, dadurch gekennzeichnet, dass die Schutzfläche (2) an der Hutablagefläche (3) schwenkbar oder gelenkig gelagert ist.

## Beschreibung

Die Erfindung betrifft eine Vorrichtung zum Sonnen- oder Sichtschutz an der Innenseite eines Heckfensters eines Fahrzeugs, insbesondere Kraftfahrzeugs mit einer Schutzfläche, welche im Fahrzeuginnern in eine die Fensterfläche bedeckende Stellung und in eine die Fensterfläche freigebende Stellung bewegbar ist.

Bekannt sind Vorrichtungen zum Sonnen- oder Sichtschutz an der Innenseite eines Heckfensters eines Kraftfahrzeugs, bei denen als Schutzfläche eine Rollobahn von einer Rollowelle, angetrieben durch einen Elektromotor, in die die Fensterfläche bedeckende Stellung ausgezogen und in die die Fensterfläche freigebende Stellung durch Aufwickeln auf die Hollowelle zurückbewegt werden kann. Bei dem aus DE 102 48 591 A1 bekannten Fensterrollo wird die Rollobahn durch einen Auszugsschlitz, welcher in einer Hutablagefläche vorgesehen ist, in die die Fensterfläche bedeckende Stellung herausgezogen und durch diesen Schlitz in die die Fensterfläche freigebende Stellung zurückbewegt. Der Auszugsschlitz kann mit einem Deckel verschlossen werden.

Aufgabe der Erfindung ist es, eine Vorrichtung der eingangs genannten Art zu schaffen, welche einen einfachen Aufbau aufweist.

Diese Aufgabe wird erfindungsgemäß durch die Merkmale des Schutzanspruches 1 gelöst.

Die Unteransprüche beinhalten vorteilhafte Weiterbildungen der Erfindung.

Bei der Erfindung ist die Schutzfläche an der Hutablagefläche schwenkbar in einem Schwenklager oder gelenkig in einem Gelenk gelagert. Hieraus resultiert ein einfacher Aufbau der Vorrichtung, wobei die Schutzfläche an einem an der Hutablagefläche schwenkbaren Rahmen befestigt sein kann oder als Klappe ausgebildet sein kann.

Insbesondere bei Fahrzeugen, bei denen das Heckfenster zusammen mit einer Heckklappe zu öffnen ist und bei denen gegebenenfalls auch die Hutablagefläche mitverschwenkt wird, erfolgt keine Einschränkung in der Heckklappenöffnung durch die Sonnen- oder Sichtschutzvorrichtung.

Die Schutzfläche kann in der die Fensterfläche freigebenden Stellung in einer Vertiefung oder Ausnehmung der Hutablagefläche angeordnet sein. Die Höhe der Vertiefung oder Ausnehmung entspricht etwa der Dicke der Schutzfläche, sodass beim Anordnen der Schutzfläche in der Vertiefung oder Ausnehmung die oben liegende Fläche der Schutzfläche mit der Hutablagefläche fluchtet.

In der die Fensterfläche bedeckenden Stellung ist die Schutzfläche vorzugsweise in einem spitzen Winkel gegenüber der Heckfensterinnenseite angeordnet. Zur schwenkbaren Lagerung der Schutzfläche ist vorzugsweise ein Gelenk, welches als Vierergelenk ausgebildet sein kann, vorgesehen. Hierzu können an beiden Seitenkanten der Schutzfläche Gelenke, insbesondere Vierergelenke vorgesehen sein.

Anhand der Figuren wird an einem Ausführungsbeispiel die Erfindung noch näher erläutert.

Es zeigt
- Fig. 1: in perspektivischer Darstellung ein Ausführungsbeispiel der Erfindung; und
- Fig. 2: in Seitenansicht das in Fig. 1 dargestellte Ausführungsbeispiel.

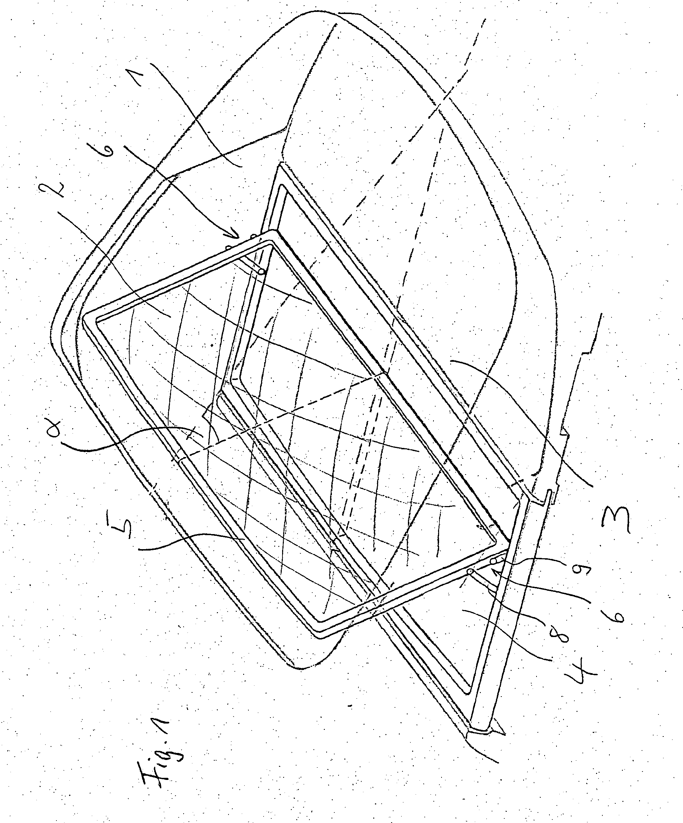

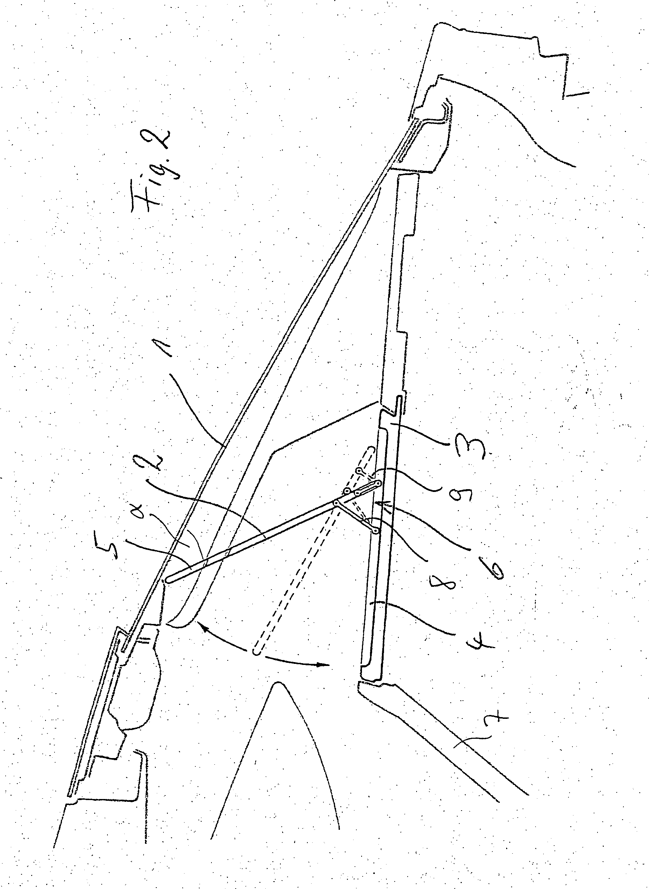

Beim dargestellten Ausführungsbeispiel besitzt die Vorrichtung zum Sonnen-oder Sichtschutz an der Innenseite eines Heckfensters 1 eines Fahrzeugs, insbesondere Kraftfahrzeugs eine Schutzfläche 2, welche schwenkbar oder in einem Gelenk 6 an einer Hutablagefläche 3 angeordnet ist. Die Hutablagefläche 3 befindet sich zwischen einer Rückenlehne 7 und der Unterkante des Heckfensters 1 im Kraftfahrzeug. Sie verläuft im wesentlichen in horizontaler Richtung, wie aus den Fig. 1 und 2 zu ersehen ist.

Beim dargestellten Ausführungsbeispiel ist die Schutzfläche 2 in einem Gelenk 6, welches als Vierergelenk ausgebildet ist, an der Hutablagefläche 3 gelagert. Es ist jedoch auch möglich, die Schutzfläche 2 in einem Schwenklager um eine Schwenkachse an der Hutablage 3 zu lagern. Die Schutzfläche 2 kann in eine die Fensterfläche des Heckfensters 1 innen abdeckende Stellung geschwenkt werden, wie es in den Fig. 1 und 2 dargestelltist. Die Schwenkbewegung kann von Hand erfolgen, wobei für einen bequemen Zugriff die Vorderkante bzw. Oberkante der Schutzfläche in der Nähe der Rückenlehne 7 angeordnet ist, wie aus den Figuren zu ersehen ist. In der die Fensterfläche bedeckenden Stellung schließen die Schutzfläche 2 und die Innenfläche des Heckfensters 7 einen spitzen Winkel *α* ein. Hierdurch wird von außen ein Sicht- oder Sonnenschutz geschaffen, der durch eine einfache Schwenkbewegung oder Aufstellbewegung der Schutzfläche 2 erreicht wird.

In der unteren Position der Schutzfläche, in welcher die Fensterfläche des Heckfensters 2 freigegeben ist, befindet sich die Schutzfläche 2 in einer Ausnehmung 4 der Hutablagefläche 3, welche, wie beim Ausführungsbeispiel gezeigt, auch als - Vertiefung in der Hutablagefläche ausgebildet sein kann. Die Höhe der Ausnehmung 4 entspricht etwa der Dicke der Schutzfläche 2, sodass in der abgesenkten Position der Schutzfläche 2 die Oberseite der Schutzfläche 2 plan mit der übrigen Fläche der Hutablagefläche 3 verläuft. Hierdurch wird eine raumsparende Anordnung der Schutzfläche 2 in ihrer Ruheposition erreicht. Bei einem Öffnen der Heckklappe des Fahrzeugs, bei welchem auch die Heckscheibe 2 mit nach oben verschwenkt wird, bleibt die Hecköffnung unbeeinträchtigt durch die Sonnen-oder Sichtschutzvorrichtung

Wie aus Fig. 1 zu ersehen ist, befinden sich an beiden Seitenkanten der Schutzfläche 2 Gelenke 6. Die Gelenke 6 sind beim Ausführungsbeispiel als Vierergelenk ausgebildet, wobei unterschiedlich lange Lenkerhebel 8 und 9 verwendet werden. Der kürzere Lenkerhebel 9 befindet sich näher zur Unterkante bzw. hinteren Kante der Schutzfläche 2 als der längere Lenkerhebel 8. Hierdurch wird, wie aus den Figuren zu ersehen ist, die schräge Positionierung der Schutzfläche 2 in der die Fensterfläche bedeckenden Stellung erreicht. Die Lenkerhebel 8 und 9 sind an Schwenkachsen oder Gelenkpunkten an ihren Enden mit der Hutablagefläche 3 und der Schutzfläche 2 verbunden. Anstelle der Betätigung von Hand kann auch in einem der beiden unteren Schwenkachsen, welche fahrzeugfeste Gelenkpunkte bilden, ein Drehmoment einer Antriebseinrichtung eingeleitet werden, um die Lenkerhebel 8, 9 und die Schutzfläche 2 in die gewünschte Position zu bringen.

Die Schutzfläche 2 kann als Folie, textiles Material oder dergleichen, welches lichtundurchlässig oder teilweise lichtundurchlässig ist, an einem Rahmen 5, welcher als geschlossener Rahmen ausgebildet sein kann, vorgesehen sein. Es ist auch möglich, die Schutzfläche 2 als Klappe auszubilden. Beim dargestellten Ausführungsbeispiel sind die Lenkerhebel 8 und 9 in Gelenkpunkten der beiden seitlichen Rahmenteile in der Nähe der Unterkante oder des unteren quer verlaufenden Rahmenteils der Schutzfläche 2 angelenkt. Die beiden fahrzeugfesten Gelenkpunkte sind, wie schon erwähnt, an der seitlichen Begrenzung der Ausnehmung 4 an der Hutablage 3 vorgesehen.

Der kürzere Lenkerhebel (9) ist in einem Gelenkpunkt an der Schutzfläche (2) angelenkt, welcher einen im wesentlichen der Länge des Lenkerhebels (9) entsprechenden Abstand von der Unterkante der Schutzfläche (2) entfernt liegt, wie insbesondere aus Fig. 2 zu ersehen ist. Der zweite Lenkerhebel (8) ist länger ausgebildet als der Lenkerhebel (9) und sein Gelenkpunkt an der Schutzfläche 2 ist weiter von der Unterkante der Schutzfläche 2 entfernt als der Gelenkpunkt des kürzeren Lenkerhebels 9. In der aufgeklappten Stellung, bei welcher die Fensterfläche des Heckfensters (1) an der Innenseite abgedeckt wird, ist die Schützfläche (2) sich am längeren Lenkerhebet (9) abgestützt.

### Bezugszeichenliste

- 1: Heckfenster
- 2: Schutzfläche
- 3: Hutablagefläche
- 4: Ausnehmung (Vertiefung in der Hutablagefläche)
- 5: Rahmen
- 6: Gelenk (Vierergelenk)
- 7: Rückenlehne
- 8: Lenkerhebel
- 9: Lenkerhebel

## Patentansprüche

1. Vorrichtung zum Sonnen- oder Sichtschutz an einer Innenseite eines Heckfensters eines Fahrzeugs mit einer Schutzfläche, welche ausgehend von einer Hutablagefläche im Fahrzeuginnern in eine die Fensterfläche bedeckende Stellung und in eine die Fensterfläche freigebende Stellung bewegbar ist, **dadurch gekennzeichnet, dass** die Schutzfläche (2) an der Hutablagefläche (3) schwenkbar oder gelenkig gelagert ist.

2. Vorrichtung nach Anspruch 1, **dadurch gekennzeichnet, dass** die Schutzfläche (2) in der die Fensterfläche freigebenden Stellung in einer Ausnehmung (4) der Hutablagefläche (3) angeordnet ist.

3. Vorrichtung nach Anspruch 1 oder 2, **dadurch gekennzeichnet, dass** die Schutzfläche (2) in der die Fensterfläche bedeckenden Stellung gegenüber der Heckfensterinnenseite in einem spitzen Winkel (α) angeordnet ist.

4. Vorrichtung nach einem der Ansprüche 1 bis 3, **dadurch gekennzeichnet, dass** die Schutzfläche (2) an einem Rahmen (5), welcher gegenüber der Hutablagefläche (3) schwenkbar oder gelenkig gelagert ist, befestigt ist.

5. Vorrichtung nach einem der Ansprüche 1 bis 4, **dadurch gekennzeichnet, dass** die Schutzfläche (2) als Klappe ausgebildet ist.

6. Vorrichtung nach einem der Ansprüche 1 bis 5, **dadurch gekennzeichnet, dass** die Schutzfläche (2) in einem Gelenk (6) an der Hutablagefläche (3) gelagert ist.

7. Vorrichtung nach Anspruch 6, **dadurch gekennzeichnet, dass** das Gelenk (6) als Vierergelenk ausgebildet ist.

8. Vorrichtung nach Anspruch 6 oder 7, **dadurch gekennzeichnet, dass** ein Lenkerhebel (9) des Gelenkes (6) an der Schutzfläche (2) einen Gelenkpunkt aufweist, der in einem etwa der Länge des Lenkerhebels (9) entsprechenden Abstand von der Unterkante der Schutzfläche (2) entfernt liegt.

9. Vorrichtung nach einem der Ansprüche 6 bis 8, **dadurch gekennzeichnet, dass** das Gelenk (6) einen zweiten Lenkerhebel (8) aufweist, an welchem die Schutzfläche (2) in ihrer die Fensterfläche bedeckenden Stellung abgestützt ist.
